# EUROPEAN PATENT SPECIFICATION

(11) **EP 3 771 602 B1**
(45) Date of publication and mention of the grant of the patent: **03.05.2023**
(21) Application number: 20188504.3
(22) Date of filing: 30.07.2020
(51) Int. Cl.: B60T 13/66, B60T 13/68, B60T 17/22, B60T 13/14, B60T 13/22, B60T 11/20, B60T 11/21

(54) **IMPROVED HYDRAULIC BRAKE ARRANGEMENT FOR OFF-ROAD VEHICLE**
VERBESSERTE HYDRAULISCHE BREMSANORDNUNG FÜR EIN GELÄNDEFAHRZEUG
AGENCEMENT DE FREINAGE HYDRAULIQUE AMÉLIORÉ POUR VÉHICULE TOUT-TERRAIN

(30) Priority: 01.08.2019 IT 201900013680
(43) Date of publication of application: 03.02.2021
(73) Proprietor: CNH Industrial Italia S.p.A., 10135 Torino (IT)
(72) Inventor: Ciarrocchi, Marco Pietro, 64027 Sant'Omero (TE) (IT)
(74) Representative: CNH Industrial IP Department

(56) References cited:
- WO-A1-2016/027242
- US-A1- 2018 029 578

## Description

### TECHNICAL FIELD

The present invention concerns a hydraulic brake arrangement, in particular a hydraulic brake arrangement for an off-road vehicle, such as an agricultural vehicle.

### BACKGROUND OF THE INVENTION

Off-road vehicles such as agricultural vehicles use hydraulic brake arrangement for braking the vehicle because of the huge mass of the vehicle which has to be braked. However, existing hydraulic brake arrangements for off-road vehicles suffer of a plurality of drawbacks.

A first limit is given by master brake cylinders which has a defined, i.e. limited, volume which is delivered to brake valves by pressing brake pedal. This feature is a great limitation if the same master brake cylinders need to activate front brakes or if brakes change their dimensions, thereby requiring a bigger hydraulic flow for their operation.

A further limit is due by the fact that pressure imparted to brakes valve is proportional to the force applied to brake pedal of the master cylinder. Accordingly, if needed, the user has to impart a very high force on such pedal, thereby making the brake uncomfortable.

Furthermore, currently no fallback features are present in case of hydraulic failure on one side of the hydraulic circuit. Indeed, hydraulic fluid would flow into the lowest pressure side passing from balancing pressure conduit which is usually present between master brake cylinders.

According to the above, the need is felt to improve existing hydraulic brake arrangement to improve their operation, even if in case of hydraulic failure, and to improve comfort of the operator. US2018029578 discloses a low-pressure vehicle braking system that controls the supply of brake fluid based on the pressure differential between left and right master cylinders associated with the different wheel brakes allowing for pressure harmonization between the left and right wheel brake circuits and a brake system module suitable for installation on an existing vehicle

An aim of the present invention is to satisfy the above mentioned needs, in a cost-effective way.

### SUMMARY OF THE INVENTION

The aforementioned aim is reached by a hydraulic brake arrangement as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a scheme of a hydraulic circuit according to the present invention;
- Figure 2 is a scheme of a hydraulic circuit of hydraulic circuit for balancing master brake cylinders according to a preferred embodiment of the present invention; and
- Figure 3 is a schematic sectional view of a balancing valve which operates according to the scheme disclosed in figure 2.

### DETAILED DESCRIPTION OF THE INVENTION

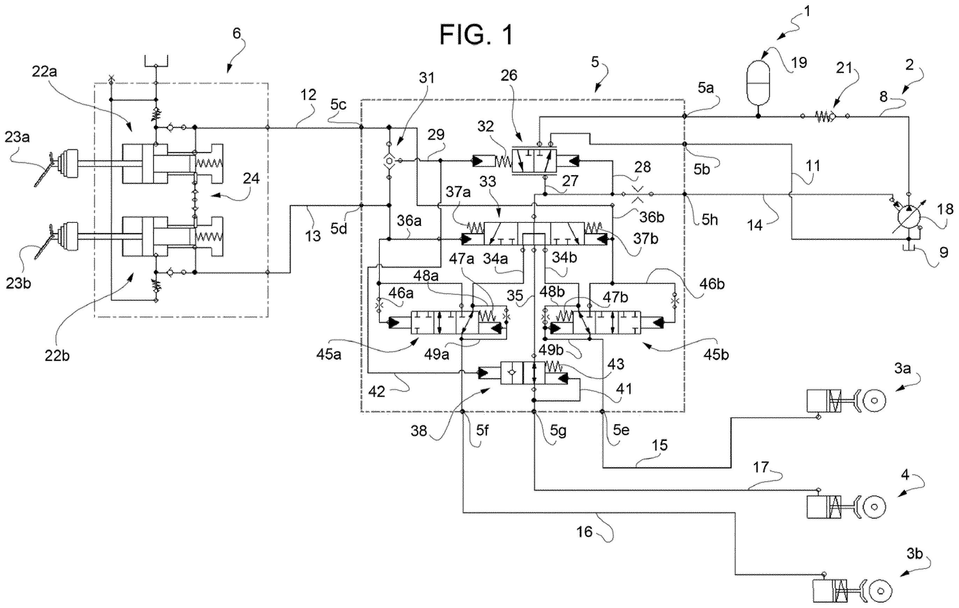

Figure 1 discloses a hydraulic brake arrangement 1 according to the invention comprising a source 2 of fluid in pressure fluidly connected to left and right rear brakes 3a, 3b and front brakes 4, a power stage valve 5 which is fluidly interposed between source of fluid in pressure 2 and brakes 3a, 3b, 4 and a pilot stage 6 configured to control power stage valve 5.

In particular, power stage valve 5 advantageously comprises a first opening 5a fluidly connected to source 2 via a related conduit 8, a second opening 5b fluidly connected to a discharge 9 via a related conduit 11, a third and a fourth openings 5c, 5d respectively fluidly connected via respective conduits 12, 13 to pilot stage 6, a fifth and a sixth openings 5e, 5f respectively fluidly connected via respective conduits 15, 16 to left and right rear brakes 3a, 3b, a seventh opening 5g fluidly connected to front brake 4 via a related conduit 17 and a eight opening 5h fluidly connected to pump 18 via a related conduit 14.

Source 2 may comprise a pump 18 configured to supply fluid in pressure to power valve stage 5 via conduit 8 and at least an accumulator 19, fluidly connected to conduit 8 downstream with respect to pump 18, configured to supply fluid in pressure to power stage 5 via conduit 8 if pump 18 is not working/in fault.

According to such described configuration, source 2 is advantageously provided with a check valve 21 configured to allow passage of fluid only from pump 18 towards power stage thereby denying passage of fluid from accumulator 19 to pump 18, if accumulator 19 is activated.

Pilot stage 6 advantageously comprises a left and a right master cylinders 22a, 22b of known typology each provided with a brake pedal 23a, 23b. These latter, when pressed, are configured to impart a hydraulic pressure signal in conduits 12, 13 via master cylinders 22a, 22b.

Master cylinders 22a, 22b are furthermore connected by a pressure balance conduit 24 described in further detail hereinafter.

Power stage valve 5 is configured to receive a hydraulic signal from conduits 12, 13, proportional to the pressure received by master cylinders 22a, 22b in order to control the fluid coming for source 2 among brakes 3a, 3b and 4.

In particular, power stage valve 5 comprises a gain valve 26 fluidly interposed between conduit 8, 11 and 14 and configured, in function of the balance of two hydraulic signals acting on opposite sides of the spool of gain valve 26, to increase the pressure of fluid coming from conduit 8 towards a first intermediate output conduit 27 or to drain fluid in first intermediate output conduit 27 to conduit 14, which is fluidly connected as loading signal to pump 18.

Accordingly, gain valve 26 is a proportional hydraulic actuated valve having three ways and two-positions. First hydraulic signal acting on a first side valve 26 is taken by a conduit 28 on conduit 14 while a second hydraulic signal acting on the opposite side is taken by a conduit 29 fluidly connected to a shuttle valve 31 fluidly interposed between conduits 12 and 13. Second hydraulic signal is furthermore assisted by the force of an elastic element 32 acting against first hydraulic signal.

Power stage valve 5 comprises a logic valve 33 fluidly interposed between first intermediate output conduit 27 and a second, a third and a fourth intermediate conduits 34a, 34b, 35 configured, in function of the balance of two hydraulic signals acting on opposite sides of the spool of logic valve 33, to divide the fluid coming from first intermediate output conduit 27 towards second, a third and a fourth intermediate conduits 34a, 34b, 35.

Accordingly, logic valve 33 is a proportional hydraulic actuated valve having four ways and three positions. First hydraulic signal acting on a first side of valve 33 is taken by a conduit 36a derived by conduit 13 while a second hydraulic signal acting on the opposite side is taken by a conduit 36b derived by conduit 12. Both hydraulic signals are assisted by related springs 37a, 37b. In particular, in a first position wherein first hydraulic signal is greater than the second, fluid may flow only towards conduit 34a, in a second position, opposite with respect the first, fluid may flow only towards conduit 34b while in a third intermediate position fluid is divided between conduits 34a, 34b and 35.

Power stage valve 5 comprises a selection valve 38 fluidly interposed on conduit 35 between logic valve 33 and seventh opening 5g. Selection valve 38 is a two ways - two positions valve configured to assume a first position wherein there is free fluidic communication in conduit 35 and a second position wherein fluid may only flow from opening 5g towards logic valve 33 in function of two hydraulic signals acting on opposite sides of selection valve 38.

In particular, a first hydraulic signal is taken by a conduit 41 fluidly connected to output of valve 38 itself on conduit 35 and a second hydraulic signal is taken by a conduit 42 fluidly connected to conduit 29. Furthermore, first hydraulic signal is assisted by the force of an elastic element 43 acting on the same side of valve 38.

Power stage valve 5 further comprises a pair of security valves 45a, 45b fluidly interposed between fifth and sixth openings 5e, 5f and conduits 34a, 34b and configured, in function of a balance between respective hydraulic signals, to allow fluidic communication between conduits 34a, 34b towards openings 5e, 5f or between conduits 12 and 13 with these latter or no fluidic communication at all.

In particular, making reference for simplicity to security valve 45a, it is a three position - three ways valve wherein a first hydraulic signal acts on a first side of the spool of valve 45a and derived by a conduit 46a fluidly connected to conduit 13 and a second hydraulic signal is derived by a conduit 48a fluidly connected to conduit 34a and by a conduit 49a fluidly connected to output of valve 45a which both acts on the opposite side of this latter. Furthermore, second hydraulic signal is assisted by the force imparted by an elastic element 47a. In a mirrored way, valve 45b comprise the same elements, having the same reference number together with letter b in figure 1.

In a first position, wherein second signal is greater than first signal, valves 45a, 45b are positioned so that fluid may flow from logic valve 33 towards brakes 3a, 3b, while in a second opposite position, no fluid will pass. In an intermediate position fluid will pass from conduits 12, 13 towards brakes 3a, 3b.

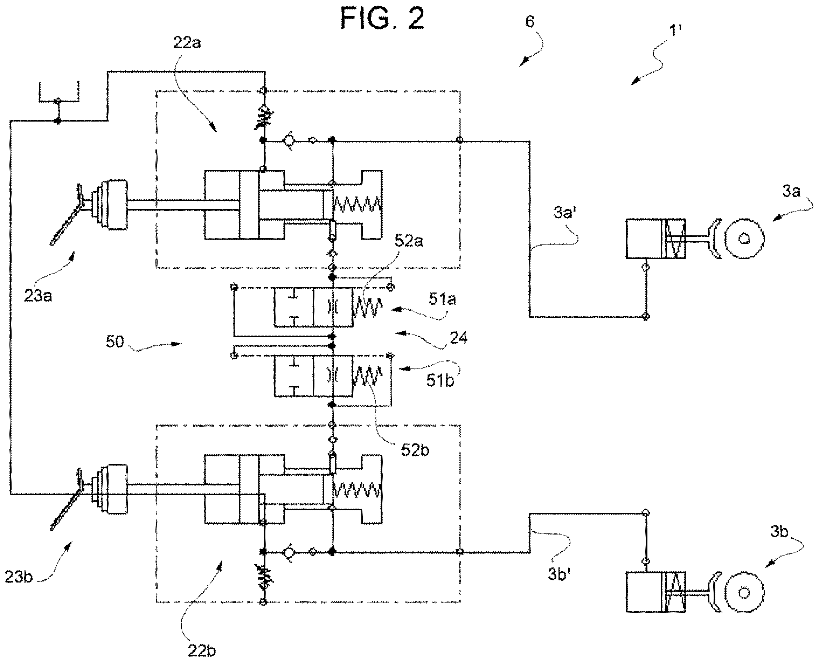

Figure 2 discloses in greater detail the structure of balance pressure conduit 24 which can be fluidly interposed between master cylinders 22a, 22b. For simplifying, it is disclosed a simplified hydraulic brake arrangement 1' wherein output of master cylinders 22a, 22b is directly connected to right and left rear brakes 3a, 3b via conduits 3a', 3b'.

In particular balance pressure conduit 24 may be provided of a security balance device 50 configured to assume a first state into which fluid pass with a resistance from one to the other master cylinders 22a, 22 in order to balance a pressure difference between this latter and a second position into which fluid cannot pass between master cylinders. In particular, such condition is a safety condition because it may happens that one side of the hydraulic circuit faults and, according to known balance devices, pressurized fluid in pressurized side of the circuit will discharge from the fault side.

In particular, such security balance device 50 may comprise a pair of safety valves 51a, 51b, preferably in series one with respect to the other and each fluidly connected to the respective master cylinder 22a, 22b. Such safety valves 51a, 51b are maintained in open position by related springs 52a, 52b which defined a force which limit the difference of pressure between master cylinders 22a, 2b. If such force overcome such threshold, valves 51a, 51b move and avoid fluidic communication between master cylinders 22a, 22b.

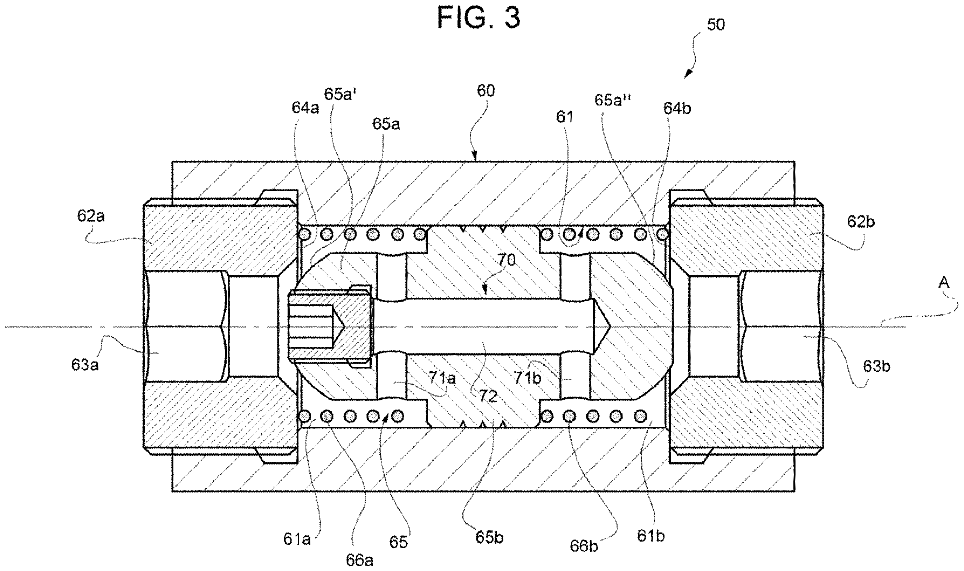

For greater clarity interpretation an exemplarily physic embodiment of security balance device 50 is shown in figure 3.

According to the described embodiment, security balance device 50 comprise a spool 60 having a tubular shape around an axis A so that defining an inner volume 61. Spool 60 further comprises, housed inside volume 61 a pair of terminal caps 62a, 62b threaded to spool 60 so as to define respective openings 63a, 63b respectively fluidly connectable to pressure balance conduit 24, i.e. to master cylinders 22a, 22b, and to define respective shoulders 64a, 64b with respect to inner surface of spool 60 inside volume 61.

According to the above defined structure, security balance device 50 comprises a sliding element 65 housed inside volume 61 between caps 62a, 62b. Sliding element 65 comprises a main cylindrical portion 65a defining two extremities 65a', 65a" configured to cooperate at contact with shoulders 64a, 64b so as to close passage of fluid through respective openings 63a, 63b.

Sliding element 65 further comprises a relief portion 65b extending radially from cylindrical portion 65a and configured to cooperate at contact in tight manner with inner surface of spool 60 so that divides volume 61 into a firs portion 61a faced to cap 62a and a second portion 61b faced to cap 62b.

Security balance device 50 further comprises a pair of elastic elements 66a, 66b, e.g. coil springs, housed respectively in first and second portions 61a, 61b of volume 61 and comprising a first extremity cooperating with shoulders 64a, 64b and a second extremity cooperating with relief portion 65b. Stiffness of elastic elements 66a, 66b is set to be equal so that sliding element 65 is maintained in a substantially centered position inside volume 61 with respect to caps 62a, 62b.

Sliding element 65 is provided with a channel system 70 configured to allow fluidic communication between first and second portion 61a, 61b of volume 61 and, accordingly, between first and second openings 63a, 63b. According to the described arrangement, channel system 70 comprises a pair of radial conduits 71a, 71b passing through cylindrical portion 65a of sliding element 65 respectively in the portion of this latter placed inside first and second volume portions 61a, 61b. Channel system 70 further comprises an axial conduit 72, preferable coaxial to axis A, realized inside sliding element 65 and fluidly connecting radial conduits 71a, 71b.

The operation of the above described hydraulic brake arrangement 1 is the following.

Making reference to figure 1, fluid in pressure is always available upstream to gain valve 26 which is, in rest position, positioned so that fluid cannot flow to conduit 27.

In a normal operation of hydraulic brake arrangement 1, Supposing that driver presses both pedals 23a, 23b of master cylinders 22a, 22b to brake, respective signals on conduit 12, 13, proportional to such pressure input, will pass on conduit 29, thereby pushing spool of valve 26 so that it allows passage of fluid from conduit 8 towards conduit 27, further increasing its pressure of a preset ratio, e.g. 1 : 1, 5.

Then, fluid passes to conduit 27 and flows to logic valve 33. Here, according to the balance between signals taken from conduits 12 and 13, it divides, as said, flow of fluid among conduits 34a, 34b and 35.

In the described situation, since both pedals are pressed (equally), valve is positioned to allows fluidic communication towards all the three aforementioned conduits.

Then, fluid will pass from one side to conduits 34a, 34b and then to security valves 45a, 45b which are placed by the balance of hydraulic signals taken on conduits 46a, 48a, 49a and 46b, 48b, 49b so that they allow passage of fluid towards conduits 15, 16 and thereby to rear brakes 3a, 3b.

Similarly, fluid pass to conduit 35 and, then to selection valve 38, which allows, according to balance between hydraulic signals 42 and 41 fluid to pass to front brake 4.

Supposing that a fault occurs in conduits 34a, 34b or upstream to logic valve 33 so that fluid pressure decreases, then force of hydraulic signal taken by conduits 46a, 46b will push valves 45a, 45b so that fluid of signals 12, 13 directly flows to conduits 15 and 16, i.e. controls brakes 3a, 3b.

Supposing that, further, a fault occurs in conduits 15, 16, hydraulic signal taken by conduits 46a, 46 will push valves 45a, 45b to avoid fluid passage towards brake 3a, 3b, i.e. to avoid fluid dispersion.

Similarly, supposing that a fault occurs in conduit 17, then hydraulic signal taken by conduit 42 will push valve 38 so that flow of fluid cannot pass from logic valve 33 towards front brakes 4, thereby avoiding fluid dispersion.

Making reference to figures 2 and 3, the operation of security balance device 50 is the following.

In a standard operation of hydraulic brake arrangement 1' , any pressure variation in left or right side of brake arrangement 1', e.g. due to master brake cylinders 22a, 22b or to impulse braking force or to an impulse on brake pedals 23a, 23b, will generate a flow of fluid passing from one of openings 63a, 63b via first and second volumes 61a, 61 through channel system 70, i.e. passing from right side to left side (or vice versa). The passage between channel system 70 and between terminal cylindrical portions 65a', 65a" and shoulders 64a, 64b generates respective narrowing which smoots/dampens passage of fluid between openings 63a, 63b.

Elastic elements 66a, 66b acts on sliding elements 65 if this latter moves for a greater pressure difference between openings 63a, 63b.

When a fault occurs in one between right and left side of hydraulic brake arrangement 1', pressure difference between openings 63a, 63b is so important that one of elastic elements 66a, 66b is pressed till reaching is minimum axial extension until closing fluid passage because of contact cooperation of terminal portions 65a', 65a" of cylindrical portions 65a and shoulders 64a, 64b.

In this way, fluid dispersion from safe side of hydraulic arrangement 1' towards the fault side through balance pressure conduit 24 is avoided.

In view of the foregoing, the advantages of a hydraulic brake arrangement 1 according to the invention are apparent.

The proposed layout is versatile, compact and allows braking with low pressure needed on brake pedals 23a, 24a while providing a great pressure fluid on brakes 3 and 4. Accordingly, comfort of the driver is increased.

Furthermore, the presence of security valves 38, 45a, 45b allows to preserve braking function also in case of hydraulic deficiencies/failures from upstream to this latter, allowing directly braking by master cylinders 22a, 22b.

Similarly, if problems arise downstream to security valves, i.e. brake hose is broken, they can isolate upstream conduits to prevent discharge of the circuit from the failed hose.

Furthermore, all valves are merely hydraulic actuated valves, accordingly there is no need for complex electronic actuation with related need of programmable control software.

Again, the use of a safety balancing valve 50 on balance conduit 24 allows at the same time to balance pressure difference between first and second master cylinders 22a, 22b.

The use of the proposed layout of spool 60 with sliding elements 65 allows a compact balance and safety function, thereby preventing discharge of hydraulic brake arrangement from pressurized side of the circuit to the failed one.

It is clear that modifications can be made to the described hydraulic brake arrangement 1 which do not extend beyond the scope of protection defined by the claims.

For example, it is clear that conduit topography and signals derivations may be changed according to design conditions.

Furthermore it is clear that gain, logic and safety valves may be realized thanks to equivalent valves maintaining the same claimed functions.

Again, safety balance device can be realized with a different layout and, similarly, spool 60 and sliding element 65.

## Claims

1. Hydraulic brake arrangement (1) comprising rear and/or front brakes (3, 4) of an off-road vehicle, said hydraulic brake arrangement (1) comprising a source (2) of fluid in pressure, a power stage valve (5) fluidly interposed between said source (2) and said rear and/or front brakes (3, 4) and a pilot stage (6), said pilot stage (6) being configured to provide a first and a second hydraulic pressure signal to control said power stage valve (5) to allow fluid from said source (2) to flow towards said rear and/or front brakes (3, 4), **characterized by** said power stage valve (5) comprising a gain valve (26), a logic valve (33) and a plurality of security valves (45a, 45b, 38),
said gain valve (26) being fluidly interposed between said source (2) and said logic valve (33) and being configured to assume at least a first position in which it allows passage of fluid to said logic valve (33) while increasing pressure value of the this latter and a second position into which fluid passage is prevented, in function of the greatest between said first and second hydraulic pressure signals;
said logic valve (33) being fluidly interposed between said gain valve (26) and said plurality of security valve (45a, 45b, 38) and being configured to subdivide the flow of fluid among at least one of said plurality of security valves (45a, 45b, 38) in function of said first and second hydraulic pressure signals;
said plurality of security valves (45a, 45b, 38) being fluidly interposed between said logic valve (33) and said rear and/or front brakes (3, 4) and being configured to allow passage of fluid from logic valve (33) to said rear and/or front brakes (3, 4) or to allow passage of said first and second hydraulic pressure signals or no passage of fluid towards said rear and/or front brakes (3, 4) in function of said first and second hydraulic pressure signals and at least one hydraulic signal taken from upstream or downstream with respect to said security valves (45a, 45b, 38).

2. Hydraulic brake arrangement according to claim 1, wherein said gain valve (26), said logic valve (33) and said plurality of security valves (45a, 45b, 38) are solely hydraulically controlled valves.

3. Hydraulic brake arrangement according to claim 1 or 2, wherein said gain valve (26) is a proportional valve.

4. Hydraulic brake arrangement according to any of claims 1 to 3, wherein said plurality of security valves (45a, 45b, 38) comprises a three ways - three positions valve (45a, 45b) configured to assume a first position wherein no fluid may flow from said logic valve (33) to said rear brakes (3), a second position wherein fluid may flow from said logic valve (33) to said rear brakes (3) and a third position wherein fluid may flow from said first and second hydraulic signals directly to said rear brakes (3), said positions are assumed in function of said first and second hydraulic signals against a sum of a hydraulic signal taken upstream to said security valves (45a, 45b) and a hydraulic signal taken downstream to said security valves (45a, 45b).

5. Hydraulic brake arrangement according to any of claims 1 to 4, wherein said plurality of security valves (45a, 45b, 38) comprises a two ways- two positions valve (38) configured to assume a first position allowing fluidic communication between said logic valve (33) and said front brakes (4) and a second position not allowing fluidic communication from said logic valve (33) towards said front brakes (4) in function of the greatest between said first and second hydraulic pressure signals and at least a signal taken downstream with respect to said valve (38) .

6. Hydraulic brake arrangement according to any of the preceding claims, wherein said source of fluid (2) comprises a pump (18) configured to supply fluid to said power stage valve (5).

7. Hydraulic brake arrangement according to claim 6, further comprising an accumulator (19) fluidly interposed in parallel between said pump (19) and said power stage valve (5) .

8. Hydraulic brake arrangement according to any of the preceding claims, wherein said pilot stage (6) comprises a first and a second master cylinders (22a, 22b), said first and second master cylinders (22a, 22b) being configured to supply the first and the second hydraulic pressure signals to said power stage valve (5) when a pressure is acting on this latter.

9. Hydraulic brake arrangement according to claim 8, wherein said pilot stage (6) comprises a balance pressure conduit (24) fluidly interposed between said first and a second master cylinders (22a, 22b), said pilot stage (6) fluidly comprising a safety balance device (50) interposed on said balance pressure conduit (24) and configured to allow fluidic communication between said first and a second master cylinders (22a, 22b) only below a predetermined pressure difference level between first and second master cylinders (22a, 22b).

10. Hydraulic brake arrangement according to claim 9, wherein said safety balance device (50) comprises two ways - two positions valves (51a, 51b) fluid in series one with respect to the one on said balance pressure conduit (24).

11. Hydraulic brake arrangement according to claim 10, wherein valves (51a, 51b) are fluidly actuated against a force of an elastic element (52a, 52b) by hydraulic signals taken upstream and downstream with respect to said valves (51a, 51b) .

## Patentansprüche

1. Hydraulische Bremsanordnung (1) mit hinteren und/oder vorderen Bremsen (3, 4) eines Geländefahrzeugs, wobei die hydraulische Bremsanordnung (1) eine Quelle (2) von unter Druck stehendem Fluid, ein Leistungsstufenventil (5), das fluidisch zwischen der Quelle (2) und den hinteren und/oder vorderen Bremsen (3, 4) eingefügt ist, und eine Vorsteuerstufe (6) aufweist, wobei die Vorsteuerstufe (6) dazu eingerichtet ist, ein erstes und ein zweites hydraulisches Drucksignal zum Steuern des Leistungsstufenventils (5) bereitzustellen, um einen Fluidfluss von der Quelle (2) zu den hinteren und/oder vorderen Bremsen (3, 4) zu ermöglichen,
**dadurch gekennzeichnet, dass**
das Leistungsstufenventil (5) ein Verstärkungsventil (26), ein Logik-Ventil (33) und eine Mehrzahl von Sicherheitsventilen (45a, 45b, 38) aufweist,
wobei das Verstärkungsventil (26) fluidisch zwischen der Quelle (2) und dem Logik-Ventil (33) eingefügt und dazu eingerichtet ist, mindestens eine erste Stellung, in der es einen Fluidfluss zu dem Logik-Ventil (33) während ansteigendem Druckwert des letzteren ermöglicht, und eine zweite Stellung anzunehmen, in der ein Fluidfluss verhindert wird, in Abhängigkeit von dem größten Wert aus dem ersten und dem zweiten hydraulischen Drucksignal;
wobei das Logik-Ventil (33) fluidisch zwischen dem Verstärkungsventil (26) und der Mehrzahl von Sicherheitsventilen (45, 45b, 38) eingefügt und dazu eingerichtet ist, den Fluidfluss zwischen mindestens einem der Mehrzahl von Sicherheitsventilen (45, 45b, 38) in Abhängigkeit von dem ersten und zweiten hydraulischen Drucksignal zu unterteilen;
wobei die Mehrzahl von Sicherheitsventilen (45a, 45b, 38) fluidisch zwischen dem Logik-Ventil (33) und den hinteren und/oder vorderen Bremsen (3, 4) eingefügt und dazu eingerichtet sind, einen Fluidfluss von dem Logik-Ventil (33) zu den hinteren und/oder vorderen Bremsen (3, 4) zu ermöglichen oder einen Durchfluss des ersten und zweiten hydraulischen Drucksignals oder keinen Fluidfluss zu den hinteren und/oder vorderen Bremsen (3, 4) in Abhängigkeit von dem ersten und zweiten hydraulischen Drucksignal und mindestens einem hydraulischen Signal zu ermöglichen, das stromaufwärts oder stromabwärts bezüglich der Sicherheitsventile (45a, 45b, 38) entnommen wird.

2. Hydraulische Bremsanordnung nach Anspruch 1, wobei das Verstärkungsventil (26), das Logik-Ventil (33) und die Mehrzahl von Sicherheitsventilen (45a, 45b, 38) ausschließlich hydraulisch gesteuerte Ventile sind.

3. Hydraulische Bremsanordnung nach Anspruch 1 oder 2, wobei das Verstärkungsventil (26) ein Proportionalventil ist.

4. Hydraulische Bremsanordnung nach einem der Ansprüche 1 bis 3, wobei die Mehrzahl von Sicherheitsventilen (45a, 45b, 38) ein drei Wege - drei Stellungs - Ventil (45a, 45b) aufweist, das dazu eingerichtet ist, eine erste Stellung, wobei kein Fluid von dem Logik-Ventil (33) zu den hinteren Bremsen (3) fließen kann, eine zweite Stellung, wobei Fluid von dem Logik-Ventil (33) zu den hinteren Bremsen (3) fließen kann, und eine dritte Stellung einzunehmen, wobei Fluid von dem ersten und zweiten hydraulischen Signal direkt zu den hinteren Bremsen (3) fließen kann, wobei die Stellungen in Abhängigkeit von dem ersten und zweiten hydraulischen Signal gegenüber einer Summe eines hydraulischen Signals, das stromaufwärts von den Sicherheitsventilen (45a, 45b) entnommen wird, und eines hydraulischen Signals, das stromabwärts von den Sicherheitsventilen (45a, 45b) entnommen wird, angenommen werden.

5. Hydraulische Bremsanordnung nach einem der vorhergehenden Ansprüche 1 bis 4, wobei die Mehrzahl von Sicherheitsventilen (45a, 45b, 38) ein zwei Wege - zwei Stellungs - Ventil aufweist, das dazu eingerichtet ist, eine erste Stellung, die eine fluidische Kommunikation zwischen dem Logik-Ventil (33) und den vorderen Bremsen (4) zulässt, und eine zweiten Stellung, die keine fluidische Kommunikation von dem Logik-Ventil (33) zu den vorderen Bremsen (4) in Abhängigkeit von der größten Differenz zwischen dem ersten und zweiten hydraulischen Drucksignal und mindestens einem Signal zulässt, das stromabwärts bezüglich des Ventils (38) entnommen wird.

6. Hydraulische Bremsanordnung nach einem der vorhergehenden Ansprüche, wobei die Fluidquelle (2) eine Pumpe (18) aufweist, die dazu eingerichtet ist, das Leistungsstufenventil (5) mit Fluid zu versorgen.

7. Hydraulische Bremsanordnung nach Anspruch 6, die des Weiteren eine Speichereinrichtung (19), die fluidisch parallel zwischen der Pumpe (18) und dem Leistungsstufenventil (5) eingefügt ist.

8. Hydraulische Bremsanordnung nach einem der vorhergehenden Ansprüche, wobei die Vorsteuerstufe (6) einen ersten und einen zweiten Masterzylinder (22a, 22b) aufweist, wobei der erste und zweite Masterzylinder (22a, 22b) dazu eingerichtet ist, das Leistungsstufenventil (5) mit dem ersten und dem zweiten hydraulischen Drucksignal zu versorgen, wenn ein Druck auf das Leistungsstufenventil (5) wirkt.

9. Hydraulische Bremsanordnung nach Anspruch 8, wobei die Vorsteuerstufe (6) eine Druckausgleichsleitung (24) aufweist, die fluidisch zwischen dem ersten und einem zweiten Masterzylinder (22a, 22b) eingefügt ist, wobei die Vorsteuerstufe (6) ein Sicherheits-Ausgleichsgerät (50) aufweist, das in der Druckausgleichsleitung (24) fluidisch eingefügt und das dazu eingerichtet ist, eine fluidische Kommunikation zwischen dem ersten und einem zweiten Masterzylinder (22a, 22b) nur unterhalb eines vorbestimmten Druckdifferenzniveaus zwischen dem ersten und zweiten Masterzylinder (22a, 22b) zuzulassen.

10. Hydraulische Bremsanordnung nach Anspruch 9, wobei das Sicherheits-Ausgleichsgerät (50) zwei Wege - zwei Stellungs - Ventile (51a, 51b) aufweist, die bezüglich eines in der Druckausgleichsleitung (24) befindlichen fluidisch in Serie sind.

11. Hydraulische Bremsanordnung nach Anspruch 10, wobei die Ventile (51a, 51b) fluidisch gegen eine Kraft eines elastischen Elements (52a, 52b) von hydraulischen Signalen betätigt werden, die stromaufwärts und stromabwärts bezüglich des Ventils (51a, 51b) entnommen werden.

## Revendications

1. Dispositif de freins hydrauliques (1) comprenant des freins arrière et/ou avant (3, 4) d'un véhicule tout terrain, ledit dispositif de freins hydrauliques (1) comprenant une source (2) de fluide sous pression, une soupape d'étage de puissance (5) fluidiquement interposée entre ladite source (2) et lesdits freins arrière et/ou avant (3, 4) et un étage pilote (6), ledit étage pilote (6) étant configuré pour fournir un premier et un second signal de pression hydraulique pour commander ladite soupape d'étage de puissance (5) pour permettre au fluide de ladite source (2) de s'écouler vers lesdits freins arrière et/ou avant (3, 4), **caractérisé en ce que** ladite soupape d'étage de puissance (5) comprend une soupape de gain (26), une soupape logique (33) et une pluralité de soupapes de sécurité (45a, 45b, 38),
ladite soupape de gain (26) étant fluidiquement interposée entre ladite source (2) et ladite soupape logique (33) et étant configurée pour prendre au moins une première position dans laquelle elle permet le passage de fluide vers ladite soupape logique (33) tout en augmentant la valeur de pression de cette dernière et une seconde position dans laquelle
le passage du fluide est empêché, en fonction du plus grand entre lesdits premier et second signaux de pression hydraulique ;
ladite soupape logique (33) étant fluidiquement interposée entre ladite soupape de gain (26) et ladite pluralité de soupapes de sécurité (45a, 45b, 38) et étant configurée pour subdiviser l'écoulement de fluide parmi au moins une de ladite pluralité de soupapes de sécurité (45a, 45b, 38) en fonction desdits premier et second signaux de pression hydraulique ;
ladite pluralité de soupapes de sécurité (45a, 45b, 38) étant fluidiquement interposées entre ladite soupape logique (33) et lesdits freins arrière et/ou avant (3, 4) et étant configurées pour permettre le passage de fluide depuis la soupape logique (33) vers lesdits freins arrière et/ou avant (3, 4) ou pour permettre le passage desdits premier et second signaux de pression hydraulique ou aucun passage de fluide vers lesdits freins arrière et/ou avant (3, 4) en fonction desdits premier et second signaux de pression hydraulique et d'au moins un signal hydraulique pris en amont ou en aval par rapport auxdites soupapes de sécurité (45a, 45b, 38).

2. Dispositif de freins hydrauliques selon la revendication 1, dans lequel ladite soupape de gain (26), ladite soupape logique (33) et ladite pluralité de soupapes de sécurité (45a, 45b, 38) sont des soupapes à commande uniquement hydraulique.

3. Dispositif de freins hydrauliques selon la revendication 1 ou 2, dans lequel ladite soupape de gain (26) est une soupape proportionnelle.

4. Dispositif de freins hydrauliques selon l'une quelconque des revendications 1 à 3, dans lequel ladite pluralité de soupapes de sécurité (45a, 45b, 38) comprend une soupape à trois voies et trois positions (45a, 45b) configurée pour prendre une première position dans laquelle aucun fluide ne peut s'écouler de ladite soupape logique (33) vers lesdits freins arrière (3), une deuxième position dans laquelle le fluide peut s'écouler de ladite soupape logique (33) vers lesdits freins arrière (3) et une troisième position dans laquelle le fluide peut s'écouler desdits premier et second signaux hydrauliques directement vers lesdits freins arrière (3), lesdites positions sont prises en fonction desdits premier et second signaux hydrauliques par rapport à une somme d'un signal hydraulique pris en amont vers lesdites soupapes de sécurité (45a, 45b) et d'un signal hydraulique pris en aval vers lesdites soupapes de sécurité (45a, 45b).

5. Dispositif de freins hydrauliques selon l'une quelconque des revendications 1 à 4, dans lequel ladite pluralité de soupapes de sécurité (45a, 45b, 38) comprend une soupape à deux voies et deux positions (38) configurée pour prendre une première position permettant la communication fluidique entre ladite soupape logique (33) et lesdits freins avant (4) et une seconde position ne permettant pas la communication fluidique de ladite soupape logique (33) vers lesdits freins avant (4) en fonction du plus grand entre lesdits premier et second signaux de pression hydraulique et au moins un signal pris en aval par rapport à ladite soupape (38).

6. Dispositif de freins hydrauliques selon l'une quelconque des revendications précédentes, dans lequel ladite source de fluide (2) comprend une pompe (18) configurée pour fournir du fluide à ladite soupape d'étage de puissance (5).

7. Dispositif de freins hydrauliques selon la revendication 6, comprenant en outre un accumulateur (19) fluidiquement interposé en parallèle entre ladite pompe (19) et ladite soupape d'étage de puissance (5).

8. Dispositif de freins hydrauliques selon l'une quelconque des revendications précédentes, dans lequel ledit étage pilote (6) comprend un premier et un second cylindres maîtres (22a, 22b), lesdits premier et second cylindres maîtres (22a, 22b) étant configurés pour fournir les premier et second signaux de pression hydraulique à ladite soupape d'étage de puissance (5) lorsqu'une pression agit sur cette dernière.

9. Dispositif de freins hydrauliques selon la revendication 8, dans lequel ledit étage pilote (6) comprend une conduite de pression d'équilibre (24) fluidiquement interposée entre lesdits premier et second cylindres maîtres (22a, 22b), ledit étage pilote (6) comprenant fluidiquement un dispositif d'équilibre de sécurité (50) interposé sur ladite conduite de pression d'équilibre (24) et configuré pour permettre une communication fluidique entre lesdits premier et second cylindres maîtres (22a, 22b) uniquement en dessous d'un niveau de différence de pression prédéterminé entre les premier et second cylindres maîtres (22a, 22b).

10. Dispositif de freins hydrauliques selon la revendication 9, dans lequel ledit dispositif d'équilibre de sécurité (50) comprend des soupapes à deux voies et à deux positions (51a, 51b) de fluide en série l'une par rapport à celle sur ladite conduite de pression d'équilibre (24).

11. Dispositif de freins hydrauliques selon la revendication 10, dans lequel les soupapes (51a, 51b) sont fluidiquement actionnées contre une force d'un élément élastique (52a, 52b) par des signaux hydrauliques pris en amont et en aval par rapport auxdites soupapes (51a, 51b).
